Europäisches Patentamt

European Patent Office

Office européen des brevets

(19)

(11) Veröffentlichungsnummer: **0 035 092**
**B1**

(12) EUROPÄISCHE PATENTSCHRIFT

(45) Veröffentlichungstag der Patentschrift:
29.05.85

(51) Int. Cl.⁴: **F 16 J 15/36**, F 16 J 3/04

(21) Anmeldenummer: 81100006.6

(22) Anmeldetag: 02.01.81

(54) Gleitringdichtung mit federndem Wellenbalg.

(30) Priorität: 10.01.80 DD 218388
10.01.80 DD 218389

(43) Veröffentlichungstag der Anmeldung:
09.09.81 Patentblatt 81/36

(45) Bekanntmachung des Hinweises auf die Patenterteilung:
29.05.85 Patentblatt 85/22

(84) Benannte Vertragsstaaten:
CH DE FR GB LI NL

(56) Entgegenhaltungen:
FR - A - 1 255 939
FR - A - 2 149 079
GB - A - 1 325 940
US - A - 2 233 599
US - A - 2 389 528

(73) Patentinhaber: **VEB Chemieanlagenbaukombinat Leipzig-Grimma, Bahnhofstrasse 3-5, DDR-7240 Grimma (DD)**

(72) Erfinder: **Schmidt, Karl, Schwarzbacher Strasse 28, DDR-6121 Merbelsrod (DD)**

(74) Vertreter: **Patentanwälte Beetz sen. - Beetz jun. Timpe - Siegfried - Schmitt-Fumian, Steinsdorfstrasse 10, D-8000 München 22 (DE)**

BUNDESDRUCKEREI BERLIN

## Beschreibung

Die Erfindung betrifft eine Gleitringdichtung mit federndem Wellenbalg zum Abdichten von Wellendurchführungen, die in rotierender Ausführung in Breitwaschmaschinen, Pumpen u. dgl. und in stationärer Ausführung in den Aggregaten für die Verfahrenstechnik, im Hochtemperaturbereich, im Kältebetrieb und zum Abdichten giftiger Medien einsetzbar ist.

In Gleitringdichtungen werden gegenwärtig zwei Metallbalgtypen eingesetzt, die bei abzudichtenden agressiven und verschmutzten Medien, die oft nicht mehr beständigen Sekundärdichtelemente sowie herkömmliche Federnsysteme durch ihre flexible Eigenschaft ersetzen und deren Funktion mit übernehmen. Der Unterschied zwischen beiden Balgtypen besteht darin, daß sogenannte Lamellenbälge aus dünnen Membranen an ihren Außen- und Innendurchmesser in erforderlicher Lamellenzahl verschweißt werden und der andere Balgtyp aus tiefgezogenen dünnwandigen Rohren mit mechanisch angerollten oder hydraulisch geformten federnden Wellen besteht.

Vorteile der Lamellenbälge bestehen darin, daß diese gegenüber den Wellenbälgen, auch handelsüblich Rollbälge genannt, flexibler sind und durch geringe Baulängen raumsparend angeordnet werden können. Wesentliche Nachteile ergeben sich durch eine geringere Federkonstante, im besonderen durch die sehr viel höheren Herstellungskosten zum Vergleich bei Wellenbälgen.

Nachteile entstehen auch dadurch, daß die Schweißnähte an den Membranen störanfällig durch die interkristalline Korrosion sind.

Bekannt ist auch, daß umlaufende Lamellenbälge schwingungsempfindlicher als Wellenbälge sind. Zur Vermeidung von Dauerbrüchen müssen bei Balgauslenkungen und Schwingungseinflüssen Lamellenbälge sorgfältiger und wirksamer abgestützt werden, wie die billiger herzustellenden Wellenbälge. Ein Nachteil besteht auch darin, daß im fast drucklosen Niederdruckbereich zusätzlich eine Druckfeder eingebaut wird, da für die erforderliche Gleitflächenpressung die Federkonstante nur bei vierwandigen Wellenbälgen ausreichend zur Verfügung steht und andererseits der Betriebsdruck für die Gleitflächenpressung als hydraulische Belastungskraft fehlt.

Zu wesentlichen Funktionsstörungen kann es im Betrieb mit verschmutzten Medien oder Waschlaugen mit Textilrückständen kommen, wenn die außen über dem Balg angeordnete Druckfeder durch Ablagerungen mit dem Wellenbalg blockiert wird, oder bei innen angeordneter Druckfeder der Wellenbalg blockiert werden kann, wenn bei einem zu geringen Abstand zwischen den Wellen sich Ablagerungen in den Wellentaschen bilden. Zu funktionsstörenden Ablagerungen kann es auch innen am Wellenbalg kommen, wenn auch mit einer geringen Leckage Gleitflächenabrieb oder auskristallisierende Stoffe mitgeführt werden und sich innen in den Balgtaschen ablagern, da keine Abführung nach außen angeordnet ist.

In Breitwaschmaschinen und dergleichen Aggregaten, die in Schweißkonstruktionen gefertigt werden, treten bei der doppelseitigen Abdichtung der Leitwalzen zwangsläufig axiale Maßdifferenzen auf, die mit herkömmlichen Gleitringdichtungen nicht auszugleichen sind, da eine axiale Verstellmöglichkeit fehlt.

Auch bei bekannten stationären Dichtungsausführungen ergeben sich Nachteile. Gegen Torsions- und Schwingungseinflüsse ist zum Beispiel zwischen dem Balg und dem Dichtungsgehäuse ein besonders geformtes federndes Stahlband angeordnet. Bei reinen abzudichtenden Flüssigkeiten können Schwingungen und Balgauslenkungen ausgeglichen werden und ist eine Verdrehsicherheit bedingt gewährleistet. Werden aus Verschmutzungen Ablagerungen am Federband gebildet, kann eine solche Dichtung durch Blockieren ausfallen.

Im Kältebetrieb bei tiefen Temperaturen sowie bei der Abdichtung gegen giftige Stoffe ist bei Dichtungsausführungen beispielsweise zusätzlich eine Gleitringdichtung atmosphärenseitig angeordnet. Diese Dichtung soll den Zutritt der Atmosphäre und somit Vereisung im Kältebetrieb an der Hauptdichtung verhindern. Da mit einem Zwangsumlauf gekühlt oder geschmiert werden muß, ist diese Ausführung mit hohen Kosten verbunden. Da bei tiefen Temperaturen kurzzeitig eine Vereisung auftreten kann, können durch Torsionseinflüsse Auslenkungen, wie auch bei auskristallisierenden Stoffen am Gleitring und an der Balgeinheit verursacht werden. Für solche Betriebsfälle fehlen am Gleitring wirksame Verdrehsicherungen, die gleichzeitig schwingungsdämpfend wirken.

Bei einer Gleitringdichtung nach der US-PS 2 233 599 mit Metallbalg und Zusatzfeder kann eine Buchse, die sich um die Welle erstreckt, den vom Flüssigkeitsdruck bewirkten Kontakt zwischen der Welle und dem Balg verhindern und als Balgstütze wirken. Abrieb und Leckage können auf Grund der inneren Kontur der Buchse nicht ungehindert nach außen abgeführt werden. Diese Gleitringdichtung eignet sich nicht für stark verschmutzte Flüssigkeiten oder Waschlaugen.

Die FR-PS 2 149 079 besitzt zum hermetischen Schutz der Druckfedern vor Kristallisation eine rohrförmige Leckageabführung, die Flüssigkeitsverluste in einen außenliegenden Sammler leitet. Diese Leckageabführung ist für die Stabilisierung des Wellenbalges sowie zur Verschleißkontrolle bei Gleitringdichtungen ungeeignet.

Die GB-PS 1 325 940 zeigt eine Verschleißanzeige für eine Gleitringdichtung über mitrotierende Farbmarkierungen.

Die vor dem verdeckten Farbstreifen zeigen den Zustand für das Auswechseln der Gleitringdichtung an. Dieses Wirkprinzip eignet sich nicht für den Nachstellvorgang während des Betriebes auf den ursprünglichen Gleitdruck, wenn z. B. im Niederdruckbereich, fast drucklos gefahren wird.

Ziel der Erfindung ist es, Gleitringdichtungen mit einem kostengünstigen Wellenbalg zu schaffen, die in vielseitigen Anwendungsgebieten in allen Druckbereichen eingesetzt werden können, eine Einstellmöglichkeit zum Ausgleich von axialen Maßdifferenzen besitzen, für verschmutzte Flüssigkeiten mit Feststoffbestandteilen, vorzugsweise für Breitwaschmaschinen im Niederdruckbereich bei hohen Temperaturen, in Aggregaten für die chemische Verfahrenstechnik in allen Druckbereichen im besonderen bei hohen Temperaturen, im Kältebetrieb und für giftige Stoffe einsetzbar ist.

Der Erfindung liegt die Aufgabe zugrunde, bei Gleitringdichtungen die Baugruppe Gleitring-Wellenbalg für den Niederdruckbereich für stark verschmutzte Flüssigkeiten und Waschlaugen ohne eine zusätzliche Druckfeder mit ausreichender Federkonstante und entsprechenden Federkraftreserven des Wellenbalges weiterzuentwickeln, so daß von außen kontrollierbar eine Einstellung von Gleitdruckgrößen sowie eine Nachstellung zum Ausgleich von axialen Maßdifferenzen mit einer Stabilisierung des Dichtspaltes und des Wellenbalges möglich ist.

Aufgabe ist es weiterhin, bei einer kompletten, mit der Welle umlaufenden Balgeinheit innen zu erreichen, daß sich keine Ablagerungen zwischen Balgwellen in den Wellentaschen bilden, wenn chemische Bestandteile, Gleitflächenabrieb und andere Stoffe in der dampfförmig austretenden Leckage innen mitgeführt werden. Im besonderen ist durch einfache Abstützung ein schwingungsfreier Lauf des Gleitringpaares abzusichern.

Außerdem ist es die Aufgabe, für Gleitringdichtungen die Baugruppe Gleitring-Wellenbalg für den stationären Einsatz im höheren Druckbereich und im Hoch- wie im Tieftemperaturbereich weiterzuentwickeln.

Weiterhin steht die Aufgabe, durch eine Axial- und Radialführung des Gleitringes eine Balgstabilisierung zu erreichen, eine Verschleißkontrolle von außen zu gewährleisten und zu vermeiden, daß durch Ablagerungen innen am Wellenbalg Funktionsstörungen durch das Zusetzen der Wellentaschen zwischen den Wellen auftreten.

In einer Gleitringdichtung zum Abdichten von Wellendurchführungen mit einem federnden Wellenbalg, der mit dem Gleitring verschweißt ist, bei dem der Gleitring zum zentrisch axial eingestellten Gegenring den Dichtspalt bildet, wird unter Verwendung einer rohrförmigen Leckageabführung, die sich vom Gleitring zur Außenseite des Dichtungsgehäuses weisend erstreckt, die Aufgabe erfindungsgemäß wie folgt gelöst. Der mit dem rotierenden oder stationären Wellenbalg außen verschweißte Gleitring ist innen mit der rohrförmigen Leckageabführung, die als Kontrollschutzrohr ausgebildet ist, verbunden, welches sich um die Welle erstreckt und dabei zwei Ringräume bildet. Dabei liegt nur der Gleitring und das Kontrollschutzrohr, beim rotierenden Gleitring zur Welle, über speziell gestaltete Abstützelemente, wie Abstützbund und Abstützbuchse an und beim stationären Gleitring liegt dieser über die Abstützelemente wie Zentrierfedern, Führungsbolzen und Abstützbund zum Dichtungsgehäuse an.

Erfindungsgemäß ist weiterhin gemäß Anspruch 2 der Wellenbalg vierwandig, aus 4 Werkstofflagen bestehend, mit sich nach außen öffnenden kegelstumpfförmigen Spalten ausgestattet und in seinen Wellenflanken evolventenähnlich in Radien und Endflächen übergehend gefertigt. Der vierwandige Wellenbalg ist zur Erziehung einer hohen Federkraftreserve aus 4 dünnen, vor dem Ausformen ineinandergesteckten Rohren gefertigt.

Die erfindungsgemäße rotierende Anordnung des Wellenbalges hat folgenden Aufbau. Der Wellenbalg ist mit einer Klemmhülse verschweißt, die auf der drehenden Welle befestigt und mit einem Rundring zu ihr abgedichtet ist.

Am Innendurchmesser des Gleitringes ist ein Abstützbund zur Welle ausgebildet und dem Wellenbalg gegenüber ist an den Abstützbund anliegend das Kontrollschutzrohr eingeschrumpft, welches aus dem Dichtungsgehäuse herausragend sich um eine auf der Welle befindliche Abstandsbuchse mit Verstellmarkierungen erstreckt. Rückseitig am Dichtungsgehäuse ist auf einem Gewinde eine das Kontrollschutzrohr überfassende Stellmutter befestigt, die an dem axial zustellbaren Gegenring anliegt. Der Gegenring ist mittels Rundring im Dichtungsgehäuse dicht und mittels Stifte, die in Nuten des Gegenringes eingreifen, gelagert.

Mit Hilfe der angeordneten Abstützelemente ist es bei der mit der Welle umlaufenden Balgeinheit möglich, daß der Gleitring zum Gegenring zentrisch läuft, Gleitring- und Balgauslenkungen zu vermeiden sind, und Schwingungseinflüsse so kompensiert werden, daß mit stabilisierten Dichtspaltverhältnisses gearbeitet werden kann. Besonders im Niederdruckbereich ist die Einstellung, Überwachung und Korrektur des Gleitdruckes an Hand der Verstellmarkierung mit Hilfe der Abstandsbuchse bedeutsam.

Beim Dichtungsaufbau der erfindungsgemäßen stationären Anordnung ist der stationäre Wellenbalg mit einem Flansch verschweißt, der mit dem Dichtungsgehäuse über eine scheibenförmige Dichtung verbunden ist. Der Gleitring wird über im Dichtungsgehäuse angeordnete Führungsbolzen, die in axiale Nuten des Gleitringes ragen und dabei von Zentrierfedern umgeben sind, gegen Verdrehung gesichert und von den Federn in zentrischer Lage gehalten. Im Innendurchmesser des Gleitringes ist das Kontrollschutzrohr eingeschrumpft, welches bei dieser Anordnung vom Wellenbalg überfaßt wird und durch den Flansch hindurchragt. Der Gegenring, an dem der Gleitring unter der Vorspannung des federnden Wellenbalges anliegt, ist, von scheibenförmigen Dichtungen eingefaßt, mittels Wellenhülse auf der Welle befestigt. Eine erfindungsgemäße Weiterentwicklung der stationären Ausführung für den Einsatz im Tieftemperaturbereich sieht vor, daß das im Gleitring eingeschrumpfte Kontrollschutzrohr im Flansch des Dichtungsgehäuses endet, und zwar hinter dem am Flansch ausgeformten Abstützbund. Hinter dem Abstützbund ist im Flansch eine Leckagesammelkammer ausgeformt, die mit einer Ablaßschraube versehen ist und stirnseitig von einer um die Wellenhülse angeordneten Abschlußplatte und einer atmosphärenseitigen Abdichtung mit h-Profil verschlossen ist. Dabei ist die atmosphärenseitige Abdichtung mit ihrem radialen Schenkel, der am Außenumfang einen axialen Vorsprung besitzt, in eine Ringnut im Flansch eingelassen und von der Abschlußplatte angepreßt. Die Umfangsfläche des atmosphärenseitigen Dichtschenkels vom h-förmigen Abdichtring ist kegelstumpfförmig ausgeführt und wird von einem in der Abschlußplatte angeordneten Schraubring überfaßt.

Die ringförmige Abdichtung besteht aus PTFE, sie weist zwei Dichtschenkel auf und stützt sich am atmosphärenseitigen Dichtschenkel und seinen zwei Dichtlippen, von einer Ringnut unterbrochen, auf der Wellenhülse ab. Je nach Ausführung und Verwendungsabsicht der Dichtung wird die Aufgabe von den Abstützelementen z. B. den Führungsstiften mit den Zentrierfedern am Gleitring beim Kontrollschutzrohr gegenüber dem Dichtungsgehäuse und zum Kontrollschutzrohr mit dem Abstützbund im Flansch übernommen. Im Tieftemperaturbereich wird durch die atmosphärenseitige Abdichtung die Vereisung am Gleitringpaar oder am Wellenbalg vermieden. Die Gleitringdichtungen mit Wellenbalg haben in der neuen Kombinationseinheit Wellenbalg—Gleitring—Kontrollschutzrohr die Funktion, den Abrieb und die Leckage von dem Wellenbalginnenraum fernzuhalten und diese aus dem Dichtungsgehäuse abzuleiten. Damit wird die Ablagerung von Abrieb und Leckage innen am Wellenbalg wirksam verhindert.

Die Erfindung soll nachstehend in Ausführungsbeispielen beschrieben werden. Es zeigt

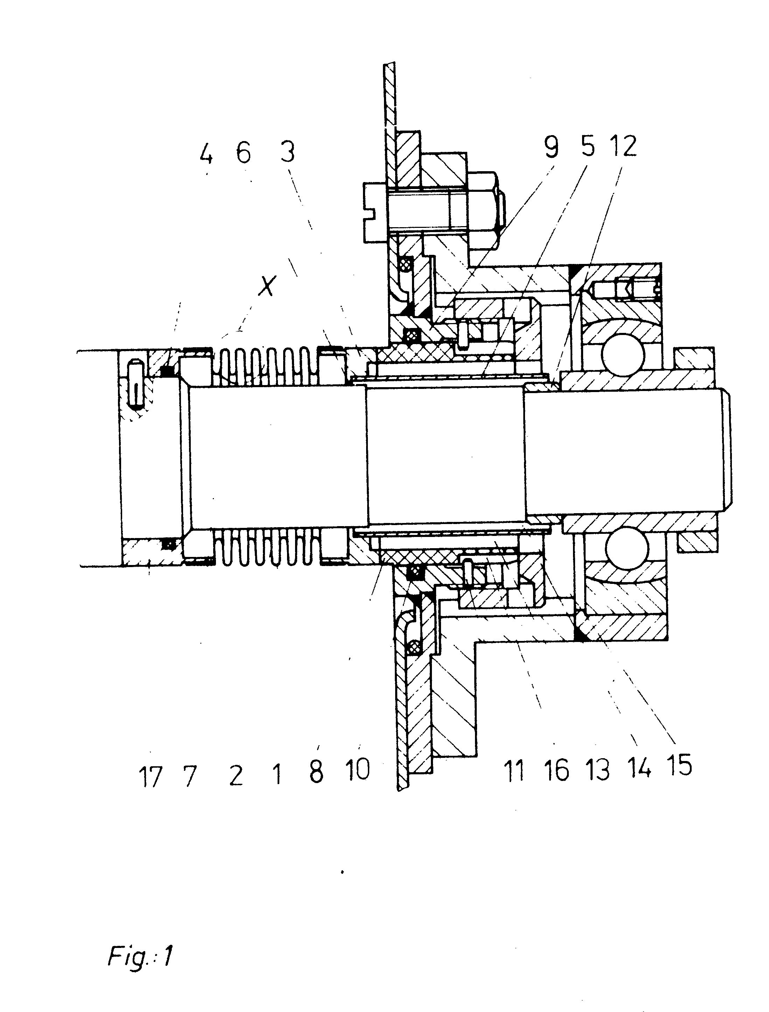

Fig. 1 die Darstellung der rotierenden Wellenbalgeinheit mit Wellenlagerung für die Abdichtung von verschmutzten Flüssigkeiten in Breitwaschmaschinen im Längsschnitt,

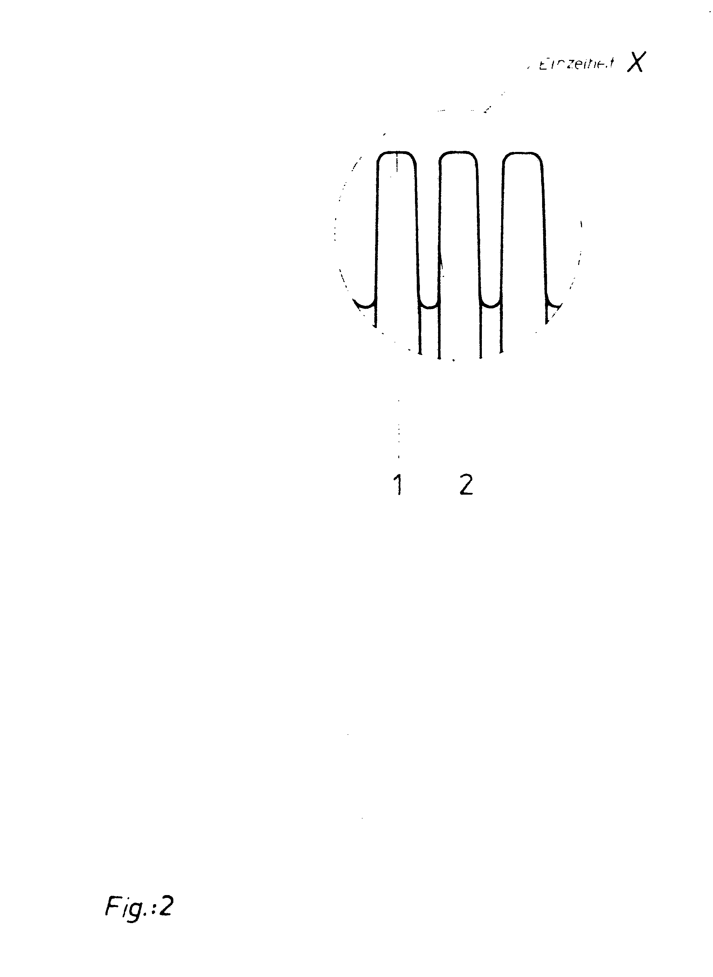

Fig. 2 die Form des Wellenbalges aus der Einzelheit x nach Fig. 1,

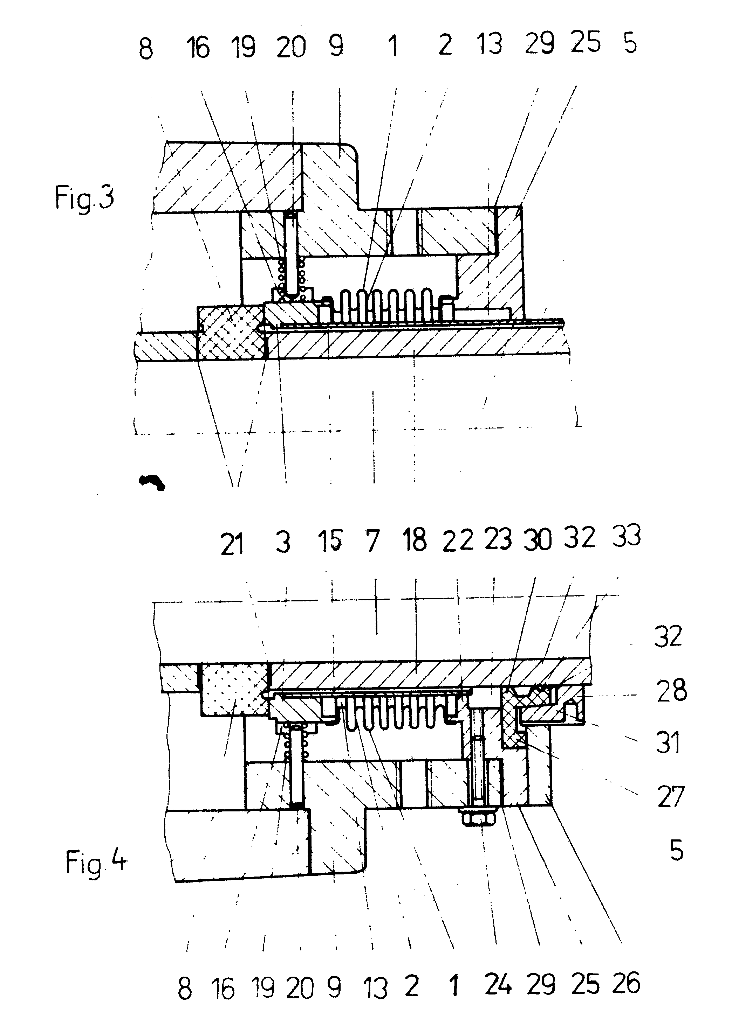

Fig. 3 die geschnittene obere Hälfte der symmetrisch ausgebildeten Gleitringdichtung für Medien mit höheren Temperaturen und Drücken mit einer stationären Wellenbalgeinheit und

Fig. 4 die Darstellung der geschnittenen unteren Hälfte der federnden stationären Wellenbalgeinheit für die Anwendung im Tieftemperaturbereich.

Bei der rotierenden Dichtungsausführung ist das Dichtungsgehäuse 9 an einer Behälterwand angeflanscht und nimmt über einen Rundring 10 den Gegenring 8, in zwei Nuten 16 axialverschieblich mittels Stifte 11 verdrehsicher gehalten auf, der durch die Stellmutter 14 an den Gleitring 3 herangestellt und so auf die notwendige Vorspannung des Wellenbalges 1 eingestellt werden kann. Der Gleitring 3 rotiert mit der Welle 7, da er über rollgeschweißte Nähte mit dem federnden Wellenbalg 1 und der Klemmhülse 17 verschweißt ist. Die Klemmhülse 17 ist zur Welle 7 mit einem Rundring 4 abgedichtet und über einen Kerbstift zu ihr verdrehsicher verbunden. Im Gleitring 3 ist am Innendurchmesser durch eine Ausdrehung ein schmaler Abstützbund 6 mit geringem Spiel zur Welle 7 ausgebildet, so daß sich dadurch eine Abstützung der Balgeinheit und eine Zentrierung des Gleitringes 3 ergibt und durch den vorgespannten federnden Wellenbalg 1 die axiale Kontakthaltung zwischen dem rotierenden Gleitring und dem stationären Gegenring 8 sich ein stabilisierter Dichtspalt ergibt. Im Gleitring 3 ist am Abstützbund 6 anliegend ein Kontrollschutzrohr 5 eingepreßt, welches sich über die Welle 7, durch die Bohrung des Gegenringes 8 und über einen außerhalb des Dichtungsgehäuses 9 auf der Welle 7 an dessen Schulter befestigten Abstandsbuchse 12 mit Verstellmarkierungen erstreckt, zu dem es nur wenig Spiel aufweist.

Unter Berücksichtigung von Betriebsfällen im Nieder- und Mitteldruckbereich kann unter Ausnutzung der Federkonstante des Wellenbalges 1 jeder gewünschte Gleitdruck eingestellt werden, wenn fast drucklos mit beispielsweise 0,1 bar gefahren werden muß.

Durch Kontrollschutzrohr 5, das ein Kontrollschutzrohr ist, welches zu etwa 70% die Abstandsbuchse überdeckt, sind mit angebrachten Markierungen an der Abstandsbuchse die Größe der Vorspannung des Wellenbalges 1 und somit die Gleitflächenpressung im Niederdruckbereich abzulesen, wenn fast drucklos gefahren wird und die Gleitflächenpressung allein durch die Federkraft des Wellenbalges 1 bestimmt wird. Auftretender Verschleiß zeigt sich an der veränderten Stellung des Kontrollschutzrohres 5 gegenüber der Markierung. Die günstigste Vorspannung kann durch Hereindrehen des Gegenringes 8 gegen den Gleitring 3 mit der Stellmutter 14 bis zur Markierung nachkorrigiert werden, da die Stellmutter 14 auf einem Außengewinde rückseitig am Dichtungsgehäuse 9 aufgebracht ist. Das Dichtungsgehäuse 9 wiederum ist unter Zwischenlage eines Rundringes an die durchbrochene Waschbehälterwand angeflanscht.

Während des Betriebes gelangt der Abrieb, chemische Bestandteile und eventuell austretende Leckage über den äußeren Ringraum 13 um das Kontrollschutzrohr 5, aus dem Dichtungsgehäuse 9. So verhindert das Kontrollschutzrohr 5 zuverlässig das Absetzen dieser Partikelchen im Wellenbalg 1. Der Abstützbund 6 und das Kontrollschutzrohr 5 lassen auch ein Walken oder Auslenken des Wellenbalges 1 bei hohen Zentrifugalkräften oder bei unzulässiger mechanischer Belastung des ungeschützt eingebauten Wellenbalges 1 nicht zu, so daß es stets zu einem zentrischen Lauf und einer gleichmäßigen Verteilung der Anpreßkräfte des Gleitringes 3 an den Gegenring 8 kommt.

Der federnde Wellenbalg 1 hat durch seine Rundungen an den Balgwellen eine höhere radiale und axiale Steifheit und deshalb eine hohe Federkonstante und zeigt auf Grund seiner vierwandigen Ausbildung eine große Federkraftreserve. Es ist auf Grund seiner Formgebung bei der Wellung mit kegelstumpfförmigen Spalten ausgestattet, womit der Spalt zwischen den Wellen außen größer ist als innen, die gerade im rauhen Betrieb und bei ungeschützter Anordnung des Wellenbalges 1 z. B. das Ansetzen von Fasern und anderen Textilrückständen wirksam verhindern und das Blockieren des Wellenbalges 1 vermeiden.

Bei der stationären Ausführung für Medien mit höheren Temperaturen und Drücken ist der Gegenring 8, auf der Welle 7 mit scheibenförmigen Dichtungen 21 beiderseits abgedichtet, von der Wellenhülse 18 gehalten. Der federnde Wellenbalg 1 ist mit dem Flansch 25 und dem stationären Gleitring 3 verschweißt. Der Flansch 25 ist über eine scheibenförmige Dichtung 29 aus Metall gegenüber dem Dichtungsgehäuse 9 der Pumpe dicht verschraubt, so daß über diese Anordnung der rotierende Gegenring 8 zum stationären Gleitring 3 den Dichtspalt abdichtet. Im Innendurchmesser des Gleitringes 3 ist das Kontrollschutzrohr 5 in einer Eindrehung eingeschrumpft und ragt durch den Wellenbalg 1 und den Abstützbund 22 des Flansches 25. Der Abrieb mit austretender Leckage wird über den vom Kontrollschutzrohr 5 gebildeten inneren Ringraum 15 aus dem Dichtungsgehäuse 9 geleitet und kann nicht in das Innere des Wellenbalges 1 gelangen.

Der Gleitring 3 besitzt am Umfang drei axial verlaufende Nuten 16 und wird von im Dichtungsgehäuse 9 befestigten Führungsbolzen 20 verdrehsicher gehalten, um die bei hohen Drükken auftretende Torsionsbeanspruchung vom stationären Wellenbalg 1 und seinen Schweißnähten fernzuhalten. Die torsionsfreie Anordnung des stationären Wellenbalges 1 ist besonders bedeutsam, da der Wellenbalg 1 zusätzlich zur eigenen Federkraft vom im Dichtungsgehäuse 9 herrschenden Systemdruck beaufschlagt wird und damit den Gleitring 3 abdichtend zum Gegenring 8 hält. Jeder der Führungsbolzen 20 ist von einer Zentrierfeder 19 umgeben, welche die Abstützelemente für den Gleitring 3 darstellen und gewährleisten, daß dieser zum Gegenring 8 zentrisch gehalten wird. Der Einsatz von scheibenförmigen Dichtungen 21; 29 aus Kupfer gestattet den Einsatz im höheren Temperaturbereich. Die Ausführung einer Gleitringdichtung mit federndem stationärem Wellenbalg 1 für die Tieftemperaturtechnik weicht von der vorstehend beschriebenen etwas ab. Hier ist das mit dem Gleitring 3 verbundene Kontrollschutzrohr 5 nicht aus dem Dichtungsgehäuse 9 herausgeführt, denn es endet nach dem Abstützbund 22 mit Flansch 25, in welchem durch eine Ausdrehung eine Leckagesammelkammer 23 mit Ablaßschraube 24 ausgebildet ist. Damit der Wellenbalg 1 nicht durch Vereisung funktionsunfähig wird, muß das Ende der Ringräume 13; 14 vor dem Zutritt von Außenluft abgeschirmt sein. Dieses geschieht durch eine atmosphärenseitige Abdichtung 27 im h-Profil, die am radial sich erstreckenden Schenkel zwischen dem Flansch 25 und der Abschlußplatte 26 verdrehsicher gehalten ist. Die beiden Dichtschenkel 30; 31 stehen zur drehenden Wellenhülse 18 in Gleitkontakt, wobei der atmosphärenseitige Dichtschenkel 31 durch eine in ihm verlaufende Ringnut 33 mit seinen Dichtlippen 32 eine labyrinthförmige Form aufweist. Die Abschlußplatte 26 wiederum nimmt einen Schraubenring 28 auf, der mit seinem kegelförmigen Innenmantel das Nachstellen des freien Schenkels der Abdichtung 27 an die Wellenhülse 18 ermöglicht. Die Vorspannung des Gleitringes 3 wird durch die Befestigung des Flansches 25 am Dichtungsgehäuse 9 erzeugt. Der für die Abdichtung des Gleitringpaares 3; 8 benötigte Anpreßdruck wird durch den auf den Wellenbalg 1 wirkenden Flüssigkeitsdruck des abzudichtenden Mediums erreicht.

Die stationäre Wellenbalgeinheit hat den Vorteil, daß der Wellenbalg 1 torsionsentlastet und nicht auslenkungsgefährdet ist, obwohl auf den Gleitring 3 hohe Anpreßkräfte wirken können. Die Abstützelemente 19; 20; 22 am Gleitring 3 und das Kontrollschutzrohr 5 vermeiden zudem Schwingungseinflüsse.

Aufstellung der verwendeten Bezugszeichen

| 1 | Wellenbalg |
|---|---|
| 2 | Wellenflanken |
| 3 | Gleitring |
| 4 | Rundring |
| 5 | Schutzrohr |
| 6 | Abstützbund |
| 7 | Welle |
| 8 | Gegenring |
| 9 | Dichtungsgehäuse |
| 10 | Rundring |
| 11 | Stift |
| 12 | Abstandsbuchse |
| 13 | äußerer Ringraum |
| 14 | Stellmutter |
| 15 | innerer Ringraum |
| 16 | Nut |
| 17 | Klemmhülse |
| 18 | Wellenhülse |
| 19 | Zentrierfeder |
| 20 | Führungsbolzen |
| 21 | Dichtung |
| 22 | Abstützbund |
| 23 | Leckagesammelkammer |
| 24 | Ablaßschraube |
| 25 | Flansch |
| 26 | Abschlußplatte |
| 27 | Abdichtung mit h-Profil |
| 28 | Schraubring |
| 29 | Dichtung |
| 30 | Dichtschenkel |
| 31 | atmosphärenseitiger Dichtschenkel |
| 32 | Dichtlippe |
| 33 | Ringnut |

**Patentansprüche**

1. Gleitringdichtung zum Abdichten von Wellendurchführungen mit Sekundärdichtungen, einem federnden Wellenbalg (1), der mit dem Gleitring (3) verschweißt ist, welche zu einem axial eingestellten Gegenring (8) einen Dichtspalt abdichtend anliegt, unter Verwendung einer rohrförmigen Leckageabführung, die sich vom Gleitring (3) zur Außenseite des Dichtungsgehäuses (9) weisend erstreckt, gekennzeichnet dadurch, daß der mit dem rotierenden oder stationären Wellenbalg (1) außen verschweißte Gleitring (3) innen mit der rohrförmigen Leckageabführung, die als Kontrollschutzrohr (5) ausgebildet ist, verbunden ist, das Kontrollschutzrohr (5) sich, zwei Ringräume (13/15) bildend, um die Welle (7) erstreckt und nur der Gleitring (3) und das Kontrollschutzrohr (5) beim rotierenden Wellenbalg (1) über Abstützbund (6) und Abstandsbuchse (12) zur Welle (7) oder beim stationären Wellenbalg (1) mittels Zentrierfedern (19), Führungsbolzen (20) und Abstützbund (22) zum Dichtungsgehäuse (9) anliegen.

2. Gleitringdichtung nach Anspruch 1, gekennzeichnet dadurch, daß der Wellenbalg (1) vierwandig, aus 4 Werkstofflagen bestehend, mit sich nach außen öffnenden kegelstumpfförmigen Spalten ausgestattet und in seinen Wellenflanken (2) evolventenähnlich in Radien und Endflächen übergehend gefertigt ist.

3. Gleitringdichtung nach Anspruch 1 oder 2, gekennzeichnet dadurch, daß der rotierende Wellenbalg (1) mit der Klemmhülse (17) verschweißt ist, die zur Welle (7) befestigt und mittels Rundring (4) abgedichtet ist, in dem Gleitring (3) ein Abstützbund (6) zur Welle (7) ausgebildet und dem Wellenbalg (1) gegenüber befindlich das Kontrollschutzrohr (5) eingeschrumpft ist, welches aus dem Dichtungsgehäuse (9) ragend sich gleitend über eine auf der Welle (7) angeordnete Abstandsbuchse (12) mit Verstellmarkierung erstreckt und rückseitig am Dichtungsgehäuse (9) befestigt eine das Kontrollschutzrohr (5) überfassende Stellmutter (14) an dem axial zustellbaren Gegenring (8) anliegt, das im Dichtungsgehäuse (9) mittels Rundring (10) dicht und mittels Stifte (11) in Nuten (16) gehalten ist.

4. Gleitringdichtung nach Anspruch 1 oder 2, gekennzeichnet dadurch, daß der stationäre Wellenbalg (1) mit einem Flansch (25) verschweißt ist, der mit dem Dichtungsgehäuse (9) über eine Dichtung (29) verbunden ist, im Dichtungsgehäuse (9) angeordnete Führungsbolzen (20) in axiale Nuten (16) des Gleitringes (3) ragen und dabei von Zentrierfedern (19) umgeben sind, in dem Gleitring (3), vom Wellenbalg (1) überfaßt, das Kontrollschutzrohr (5) eingeschrumpft ist, welches durch den Flansch (25), am Abstützbund (22) anliegend, hindurchragt und der Gegenring (8) über Dichtungen (21) auf der Welle (7) mittels Wellenhülse (18) befestigt ist.

5. Gleitringdichtung nach Anspruch 1 oder 2 und 4, gekennzeichnet dadurch, daß das Kontrollschutzrohr (5) im Abstützbund (22) des Flansches (25) endet, nachfolgend im Flansch (25) eine Leckagesammelkammer (23) mit Ablaßschraube (24) ausgebildet ist, die stirnseitig von einer um die Wellenhülse (18) in einer Abschlußplatte (26) angeordneten ringförmigen Abdichtung (27) mit h-Profil verschlossen ist, wobei um einen freiliegenden kegelförmigen Außendurchmesser der Abdichtung (27) in der Abschlußplatte (26) ein Schraubring (28) angeordnet ist.

6. Gleitringdichtung nach Anspruch 5, gekennzeichnet dadurch, daß die ringförmige Abdichtung (27) mit h-Profil aus PTFE ausgebildet ist und mittels zweiter Dichtlippen, von Ringnuten unterbrochen, auf der Wellenhülse (18) gelagert ist.

**Claims**

1. A mechanical seal for sealing shaft bushings, comprising secondary sealing means, resilient shaft bellows (1) welded to the slide ring (3), said mechanical seal engaging an axially adjusted counter-ring (8) to thereby seal a sealing gap, wherein tubular leakage discharge means extending from the slide ring (3) towards the exterior of the seal housing (9) is utilized, characterized in that the slide ring (3), which is externally welded to the rotating or the stationary shaft bellows (1), is internally connected to the tubular leakage means in the form of a protective control tube (5), and the protective control tube (5) extends about the shaft (7) to thereby form two annular spaces (13/15), and that in case of the rotating shaft bellows (1) only the slide ring (3) and the protective control tube (5) engage the shaft (7) via supporting collar (6) and spacer sleeve (12) or, in the case of the stationary shaft bellows (1), engage the sealing casing (9) by means of centering springs (19), guide pins (20) and supporting collar (22).

2. A mechanical seal as claimed in claim 1, characterized in that the shaft bellows (1) is of four-walled configuration and consists of four layers of material and is made with outwardly opening frusto-conical gaps, its shaft flanks (2) being made like involutes to merge into radii and end faces.

3. A mechanical seal as claimed in claim 1 or claim 2, characterized in that the rotating shaft bellows (1) is welded to the collet (17) which is mounted on the shaft (7) and sealed by means of an O-ring (4), that a supporting collar (6) extending towards the shaft (7) is formed in the slide ring (3) and the protective control tube (5) is mounted by being shrunk in opposite to the shaft bellows (1), said protective control tube (5) projecting out of the sealing casing (9) and extending in sliding engagement over a spacer sleeve (12) disposed on the shaft (7) and provided with displacement markings, and that an adjusting nut (14), which is secured to the rear side of the seal casing (9) and which overlaps the protective control tube (5), engages the axially adjustable counter-ring (8) which is sealingly disposed in the seal casing (9) by means of an O-ring (10) and is retained by means of pins (11) in grooves (16).

4. A mechanical seal as claimed in claim 1 or claim 2, characterized in that the stationary shaft bellows (1) is welded to a flange (25) connected via a gasket (29) with the seal casing (9), that guide pins (20) disposed in the seal casing (9) project into axial grooves (16) of the slide ring (3) and are surrounded by centring springs (19), that the protective control tube (5) is shrunk into the slide ring (3) and is overlapped by the shaft bellows (1), said protective control tube extending through the flange (25) while being in engagement with the supporting collar (22), and that the counter-ring (8) is secured via sealing members (21) on the shaft (7) by means of a shaft bushing (18).

5. A mechanical seal as claimed in claim 1 or in claims 2 and 4, characterized in that the protective control tube (5) terminates in the supporting collar (22) of the flange (25), that subsequent thereto a leakage collecting space (23) including a drain plug (24) is defined within the flange (25), the end of said leakage collecting space being closed by an H-section annular sealing member (27) disposed about the shaft bushing (18) in an end plate (26), a threaded ring (28) being disposed about an exposed conical outer diameter portion of the sealing member (27) within the end plate (26).

6. A mechanical seal as claimed in claim 5, characterized in that the H-section annular sealing member (27) is made of PTFE and is supported on the shaft bushing (18) by means of two sealing lips separated by annular grooves.

## Revendications

1. Garniture d'étanchéité à anneau coulissant servant à réaliser l'étanchéité de passages d'arbres comportant des garnitures d'étanchéité secondaires, un soufflet élastique ondulé (1) qui est soudé à l'anneau coulissant (3) qui est appliqué contre un anneau antagoniste (8) réglé axialement, en fermant de façon étanche une fente d'étanchéité, moyennant l'utilisation d'un dispositif tubulaire d'évacuation des fuites, qui s'étend à partir de l'anneau coulissant (3) en direction de la face extérieure du boîtier (9) de la garniture d'étanchéité, caractérisé en ce que l'anneau coulissant (3), qui est soudé extérieurement au soufflet ondulé tournant ou fixe (1), est relié intérieurement au dispositif tubulaire d'évacuation des fluides, qui est réalisé sous la forme d'un tube protecteur de contrôle (5), ce tube protecteur de contrôle (5) s'étendant autour de l'arbre (7) en formant deux espaces annulaires (13, 15), et que seuls l'anneau coulissant (3) et le tube protecteur de contrôle (5) s'appuient sur l'arbre (7) par l'intermédiaire d'un collet d'appui (6) et d'une douille-entretoise (12), dans le cas où le soufflet ondulé (1) est rotatif, ou sur le boîtier (9) de la garniture d'étanchéité, par l'intermédiaire de ressorts de centrage (19), de boulons guides (20) et d'un collet d'appui (22), dans le cas où le soufflet ondulé (1) est fixe.

2. Garniture d'étanchéité à anneau coulissant selon la revendication 1, caractérisé en ce que le soufflet ondulé (1) qui comporte quatre parois formées par 4 couches de matériau, est muni de fentes de forme tronconique s'ouvrant vers l'extérieur et est réalisé au niveau des flancs (2) de ses ondulations avec la forme d'une développante se prolongeant selon des rayons et des surfaces d'extrémité.

3. Garniture d'étanchéité à anneau coulissant selon la revendication 1 ou 2, caractérisé en ce que le soufflet ondulé rotatif (1) est soudé à la douille de blocage (17), qui est fixée sur l'arbre (7) et que est étanchéifiée au moyen d'un anneau circulaire (4), qu'un collet d'appui (6) pour l'arbre (7) est réalisé dans l'anneau coulissant (3) et qu'en vis-à-vis du soufflet ondulé (1), le tube protecteur de contrôle (5) est rétréci, ce tube s'étendant hors du boîtier (9) de la garniture d'étanchéité en glissant sur une douille-entretoise (12) montée sur l'arbre (7) et étant fixé sur la face arrière du boîtier (9) de la garniture d'étanchéité, et qu'un écrou de réglage (14), qui entoure le tube protecteur de contrôle (5), est appliqué contre l'anneau antagoniste (8) pouvant être avancé axialement et qui est maintenu dans le boîtier (9) de la garniture d'étanchéité d'une manière étanche au moyen d'un anneau circulaire (10) et en étant soutenu au moyen de tiges (11) dans des rainures (16).

4. Garniture d'étanchéité à anneau coulissant selon la revendication 1 ou 2, caractérisé en ce que le soufflet ondulé fixe (1) est soudé à une bride (25) qui est reliée au boîtier (9) de la garniture d'étanchéité par l'intermédiaire d'une garniture d'étanchéité (29), que des boulons-guides (20) disposés dans le boîtier (9) de la garniture d'étanchéité font saillie dans des rainures axiales (16) de l'anneau coulissant (3) et sont entourés par des ressorts de centrage (19), et que le tube protecteur de contrôle (5) est rétréci dans l'anneau coulissant (3), en étant entouré par le soufflet (1), ce tube traversant la bride (25), en s'appliquant contre le collet d'appui (22), tandis que l'anneau antagoniste (8) est fixé par l'intermédiaire de garnitures d'étanchéité (21) sur l'arbre (7), au moyen d'une douille ondulée (18).

5. Garniture d'étanchéité à anneau coulissant selon la revendication 1 ou 2 et 4, caractérisé en ce que le tube protecteur de contrôle (5) se termine dans le collet d'appui (22) de la bride (25), qu'à la suite de cela se trouve ménagée dans la bride (25) une chambre (23) de collecte des fuites comportant une vis d'évacuation (24) et qui est fermée, sur sa face frontale, par une garniture d'étanchéité annulaire (27) possédant un profil en h et disposée autour de la douille ondulée (18) dans une plaque de fermeture (26), un anneau vissable (28) étant installé autour d'un pourtour extérieur en porte-à-faux de la garniture d'étanchéité (27) dans la plaque de fermeture (26).

6. Garniture d'étanchéité à anneau coulissant selon la revendication 5, caractérisé en ce que la garniture d'étanchéité annulaire (27) munie d'un profil h est réalisée en polytétrafluoroéthylène et est montée sur la douille ondulée (18) au moyen de deux rebords d'étanchéité, qui sont interrompus par des gorges annulaires.

*Fig.:1*

Einzeiheit X

1　2

*Fig.:2*

8  16  19  20  9    1    2  13  29  25  5

Fig. 3

21   3   15   7  18  22  23  30  32  33

32

28

31

27

5

Fig. 4

8  16  19  20  9  13  2    1  24  29  25  26